Europäisches Patentamt

European Patent Office

Office européen des brevets

(19)

(11) Numéro de publication: **0 093 656**
**B1**

(12) **FASCICULE DE BREVET EUROPEEN**

(45) Date de publication du fascicule du brevet:
**25.06.86**

(21) Numéro de dépôt: **83400835.1**

(22) Date de dépôt: **27.04.83**

(51) Int. Cl.⁴: **F 16 L 59/00**, E 04 B 1/80 //
B64G1/58

(54) Procédé de fabrication d'un matériau de protection thermique à hautes performances.

(30) Priorité: **29.04.82 FR 8207415**

(43) Date de publication de la demande:
**09.11.83 Bulletin 83/45**

(45) Mention de la délivrance du brevet:
**25.06.86 Bulletin 86/26**

(84) Etats contractants désignés:
**DE GB IT NL**

(56) Documents cités:
**EP - A - 0 009 940
DE - A - 2 613 413
FR - A - 2 081 899
FR - A - 2 461 690**

(73) Titulaire: **AEROSPATIALE Société Nationale Industrielle,
37 boulevard de Montmorency, F-75781 Paris
Cédex 16 (FR)**

(72) Inventeur: **Rousseau, Gérard, 22 Hameau de Villepreux,
F-33160 Saint-Aubin-de-Medoc (FR)**

(74) Mandataire: **Lepeudry-Gautherat, Thérèse et al,
ARMENGAUD JEUNE CABINET
LEPEUDRY 23 boulevard de Strasbourg, F-75010 Paris
(FR)**

ACTORUM AG

### Description

La présente invention concerne un procédé de fabrication d'un matériau de protection thermique à hautes performances, et le matériau ainsi obtenu.

Il est connu pour certaines applications spécifiques, en particulier pour les équipements d'un étage propulsif d'engin telle qu'une fusée spatiale, de munir certains éléments de la partie arrière de cet étage, en vue de leur protection thermique, d'un matériau de protection généralement constitué de pièces en forme réalisées à partir d'un substrat de faible densité en fibres minérales ou de carbone, rigidifiées par un liant organique, tel que des résines associées éventuellement à des liants minéraux.

Ce matériau de protection doit être capable de supporter des chocs thermiques élevés qui peuvent être de l'ordre de 3000°C ou des températures de l'ordre de 1000°C ou plus, pendant plusieurs heures. Les caractéristiques du matériau obtenu sont fonction, pour l'essentiel, de la nature des fibres utilisées et des traitements qu'elles subissent.

On a déjà proposé dans l'art antérieur de réaliser ce type de matériau au moyen notamment de la technique de moulage par aspiration de fibres mises en suspension dans un bain. Selon un premier mode de réalisation le bain comporte un liant minéral, un liant organique et une dispersion de résine en poudre. Le mélange obtenu est hétérogène et la résine n'y est pas répartie de la façon uniforme. Ce matériau ne présente pas une fiabilité compatible avec les montages à effectuer sur engins d'une part et d'autre part la structure hétérogène et lâche, dûe à une mauvaise répartition des fibres et des liants, est préjudiciable à la tenue mécanique et thermique de ces pièces. Enfin cette technique ne s'applique pas aux fibres conductrices d'électricité telles que par exemple des fibres de carbone et/ou de carbure de silicium car il y a floculation du bain.

Selon cette même méthode connue, on peut réaliser un matériau formé de fibres minérales rigidifiées par au moins un liant minéral et un liant organique, ce matériau étant ensuite trempé dans une résine de renforcement. Ce procédé présente cependant certains inconvénients: en particulier il nécessite un cycle de fabrication assez long. En outre, cette technique ne peut s'appliquer aux fibres de carbone, de carbure de silicium et plus généralement aux fibres conductrices d'électricité, à cause de l'apparition d'une floculation du bain.

On connaît aussi un matériau de protection thermique constitué de fibres d'amiante ou de silice mélangées à une colle et projetées sur l'objet à protéger. Ce type de matériau peut résister à des fortes températures, mais l'hétérogénéité de l'écran réalisé et sa répartition inégale sur l'objet à protéger ont une influence défavorable sur la fiabilité.

Enfin, par le document FR-A-2 461 690 on connaît une solution contenant une résine du type formophénolique thermodurcissable en tant que matière carbonnée à pyrolyser qui constitue un bain unique d'imprégnation d'une préforme fibreuse, laquelle, avant pyrolyse, est relativement dense et peu poreuse. Cette préforme, ainsi imprégnée de résine polymérysée, subit un traitement postérieur tendant à densifier l'imprégnation et diminuer la porosité.

La présente invention a pour but de proposer un procédé de fabrication d'un matériau de protection thermique ne présentant pas les inconvénients des procédés de l'art antérieur et permettant d'obtenir un matériau de protection thermique pouvant résister à des chocs thermiques très importants pouvant être de l'ordre de 3000°C et/ou de résister à des températures élevées pouvant être de l'ordre de 1000°C pendant une dizaine d'heures.

Un autre but de l'invention est de proposer un procédé de fabrication d'un matériau de protection thermique, pouvant être réalisé en une seule opération et constitué de fibres minérales et/ou organiques liées par une résine appropriée ultérieurement durcie, et éventuellement pyrolysée, lesdites fibres étant ultérieurement recouvertes par un produit d'enduction, suivi d'un traitement thermique.

Un autre but de la présente invention est de proposer un procédé de préparation d'un matériau de protection thermique permettant d'obtenir un matériau d'une homogénéité parfaite et présentant une distribution régulière des fibres dans le matériau.

Un autre but de l'invention est de proposer un procédé de préparation d'un matériau de protection thermique selon lequel on puisse utiliser des fibres conductrices de l'électricité comme des fibres de carbone ou de carbure de silicium.

Ces buts et d'autres sont atteints par la présente invention qui concerne en effet un procédé de fabrication d'un matériau de protection thermique ou d'une pièce de protection thermique capable de supporter des chocs thermiques très importants ainsi que des températures très élevées, pouvant être de l'ordre de 1000°C pendant une dizaine d'heures, comprenant un substrat formé de fibres minérales et/ou organiques rigidifiées par une résine de renforcement, selon lequel on prépare une première solution, comportant un agent dispersant non solvant de la résine, un agent émulsionnant, dans laquelle on met en suspension lesdites fibres, et une deuxième solution comportant ladite résine liquide choisie parmi les résines thermostables et thermodurcissables ayant une teneur en carbone déterminée supérieure à 45% en poids, un agent émulsionnant identique à celui utilisé dans la première solution, un solvant de la résine et un milieu dispersant identique à celui utilisé dans la première solution et miscible avec ledit solvant, on mélange la première et la deuxième solutions jusqu'à l'obtention d'une phase liquide homogène, on maintient homogène cette phase pendant le temps nécessaire aux gouttelettes de résine liquide en suspension dans cette phase pour se rassembler lentement et venir former sur les fibres un film de résine, on forme le matériau ou la pièce, on l'essore, on le sèche et on le durcit par une cuisson adaptée, et on effectue en outre au moins une fois sur le matériau cuit l'ensemble des opérations suivantes consistant en une pyrolyse de la résine du matériau, puis un recouvrement desdites fibres par un produit d'enduction, suivi d'un traitement thermique.

Comme fibres on peut avantageusement utiliser des fibres d'un diamètre compris entre 2 et 15 microns et d'une longueur comprise entre environ 300 et 1500 microns.

Des fibres convenant plus particulièrement sont des fibres de carbone, de graphite, de carbure de silicium, de mullite, d'alumine, de silice, de verre, de nitrure de bore, de zircone, de polyamides aromatiques ou d'un composé alumino-boro-silicaté de verre respectivement connus sous les noms commerciaux «Kevlar» et «Nextel».

Le milieu dispersant est de préférence de l'eau ou un solvant organique choisi parmi les cétones aliphatiques, les alcools aliphatiques et les solvants halogénés.

L'agent émulsionnant est de préférence choisi parmi les polyalcools aliphatiques, les éthers de poly-alcools, les acides aryl- ou alkylsulfoniques, les polyphosphates alcalins et les métaphosphates alcalins.

La résine liquide est de préférence une résine formophénolique, du type résol en particulier une résine formophénolique présentant un extrait sec en poids entre 65 et 90%.

On peut également utiliser d'autres types de résines présentant des propriétés analogues et telles que des résines choisies par exemple parmi les polyimides, les polystyryl-pyridines et les polybenzimidazoles.

Lorsqu'on mélange et que l'on maintient en phase homogène les première et deuxième solutions, la résine liquide dispersée sous forme de fines gouttelettes se fixe sur les fibres et les imprègne sans que celles-ci puissent s'agglomérer même dans le cas où on utilise des fibres de carbone, de graphite ou de carbure de silicium.

Le matériau ou pièce de protection est formé de préférence par la technique de moulage par aspiration. Le matériau obtenu est constitué d'un ensemble homogène de fibres imprégnées de résine. La résine enrobant les fibres crée des liaisons à tous les points de contact des fibres entre elles. Le matériau est égoutté puis séché à basse température qui est comprise généralement entre 20 et 60°C pour une résine formo-phénolique en vue de faciliter l'élimination du milieu dispersant.

La cuisson susdite du matériau est réalisée en vue de polymériser la résine de préférence dans une étuve ventilée à une température dépendant du choix de la résine et qui se situe aux environs de 170°C pour une résine formo-phénolique.

L'ensemble des opérations consistant en une pyrolyse de la résine du matériau, puis un recouvrement des fibres du matériau par un produit d'enduction, suivi d'un traitement thermique, permet d'améliorer très sensiblement les caractéristiques mécaniques et thermiques du matériau.

La pyrolyse de la résine permettant de transformer cette résine en carbone est réalisée en atmosphère neutre à une température comprise entre environ 700°C et 2700°C en fonction du matériau traité.

Dans le cas où l'on souhaite améliorer les caractéristiques thermiques et surtout mécaniques du matériau en milieu non oxydant le produit d'enduction peut être une résine, un brai ou un carbone pyrolytique. Dans le cas de l'utilisation d'une résine on imprègne le matériau par la résine puis le traitement thermique consiste en une cuisson pour la polymérisation suivie d'une pyrolyse de cette résine. Dans le cas de l'utilisation d'un brai, le traitement thermique consiste simplement en une pyrolyse.

Dans le cas où le produit d'enduction est du carbone pyrolytique ce dernier est appliqué directement sur le matériau par dépôt chimique en phase vapeur et le traitement thermique de ce carbone pyrolytique consiste éventuellement en une graphitisation.

Dans le cas où l'on souhaite améliorer les caractéristiques mécaniques et thermiques du substrat en milieu oxydant, on réalise l'imprégnation dudit substrat par immersion dans un précurseur de matériau céramique ou dans une solution de ce précurseur. Comme précurseur, on peut utiliser un composé organométallique du silicium, du titane, du zirconium, de l'aluminium, du chrome, du bore, ou de l'hafnium. On procède ensuite au séchage pour éliminer les solvants de la solution. On polymérise, puis on pyrolyse en atmosphère neutre à des températures supérieures à 800°C et pouvant aller jusq'à 2700°C.

Le matériau obtenu par le procédé de l'invention peut être utilisé soit comme pièce de protection thermique soit comme support pour la fabrication de tuiles pour la constitution d'écran thermique, notamment pour engin spatial.

Le traitement de renforcement peut être répété un certain nombre de fois en fonction du résultat à obtenir.

D'autres avantages et caractéristiques de l'invention apparaîtront à la lecture de l'exemple suivant de réalisation donné à titre illustratif nullement limitatif.

Exemple:
On réalise un matériau de protection thermique à faible densité à partir de fibres de carbone renforcées par de la résine formo-phénolique. Pour réaliser ce matériau on utilise 1600 g de fibres de carbone, d'un diamètre compris entre 2 et 10 microns finement hachées de façon à obtenir des fibres ayant une longueur moyenne de 600 $\mu$m $\pm$ 300 $\mu$m.

On mélange ces fibres hachées dans environ 50 litres d'eau et 2 litres d'éthylène-glycol. Puis dans 50 litres d'eau, on réalise une suspension comprenant 1500 g de résine formo-phénolique du type résol, 4 litres d'alcool éthylique et 2 litres d'éthylène glycol. On procède au mélange des deux solutions et on maintient la suspension obtenue sous faible agitation pour que la résine imprègne bien les fibres.

On plonge dans ce bain l'appareillage d'aspiration destiné à mouler les pièces, à savoir un tamis filtrant recouvrant une structure perforée mince, en forme, reliée à la cuve de dépression. On sèche les pièces en étuve ventilée à 60°C pendant 12 heures pour permettre l'élimination de la totalité des solvants. On procède ensuite à la cuisson des pièces. Le cycle de cuisson se compose d'une période de 12 heures à 80°C, puis 12 heures à 170°C.

Le matériau obtenu a les caractéristiques suivantes:
— densité d'environ 0,20
— porosité d'environ 80%
— % de résine: environ 20% en poids
— résistance en flexion de l'ordre de 4 M Pa
— résistance en compression de l'ordre de
   11 M Pa.

Ce matériau subit ensuite une seconde série de traitements thermiques. Il est pyrolysé à 800°C sous atmosphère neutre pendant 4 heures.

Le feutre de carbone obtenu est imprégné par une résine de polycarbosilane, précurseur de carbure de silicium, en solution à 25% en poids.

Le feutre est égoutté puis séché sous vide pendant 5 heures à 100°C.

Il est ensuite polymérisé sous atmosphère neutre à 200°C pendant 4 heures, puis pyrolysé à environ 1200°C pendant 1 heure, ce qui transforme le polycarbosilane en carbure de silicium.

Le matériau obtenu a les caractéristiques suivantes:
— densité: 0,30
— % de carbure de silicium en poids: 40%
— résistance en flexion de l'ordre de 6 M Pa
— résistance en compression de l'ordre de 6 M Pa.

Pour tester ce matériau on procède à un essai au pistolet à plasma, ce matériau étant soumis à 10 000 kW par m², on mesure l'ablation c'est-à-dire l'épaisseur de matériau détruit par seconde.

En atmosphère oxydante l'ablation est inférieure à 0,2 mm par seconde.

En atmosphère neutre, l'ablation est inférieure à 0,1 mm par seconde.

Un teste identique est réalisé sur le matériau non renforcé obtenu à la suite de la première phase de réalisation. Il donne les résultats suivants:
— en atmosphère neutre: ablation d'environ
   0,1 mm par seconde,
— en atmosphère oxydante: ablation d'environ
   3 mm par seconde.

**Revendications**

1. Procédé de fabrication d'un matériau de protection thermique ou d'une pièce de protection thermique capable de supporter des chocs thermiques très importants ainsi que des températures très élevées, pouvant être de l'ordre de 1000°C pendant une dizaine d'heures, comprenant un substrat formé de fibres minérales et/ou organiques rigidifiées par une résine de renforcement, caractérisé en ce qu'on prépare une première solution, comportant un agent dispersant non solvant de la résine, un agent émulsionnant, dans laquelle on met en suspension lesdites fibres, et une deuxième solution comportant ladite résine liquide chiosie parmi les résines thermostables et thermoducissables ayant une teneur en carbone déterminée supérieure à 45% en poids, un agent émulsionnant identique à celui utilisé dans la première solution, un solvant de la résine et un milieu dispersant identique à celui utilisé dans la première solution et miscible avec ledit solvant, on mélange la première et la deuxième solutions jusqu'à l'obtention d'une phase liquide homogène, on maintient homogène cette phase pendant le temps nécessaire aux gouttelettes de résine liquide en suspension dans cette phase pour se rassembler lentement et venir former sur les fibres un film de résine, on forme le matériau ou la pièce, on l'essore, on le sèche et on le durcit par une cuisson adaptée, et on effectue en outre au moins une fois sur le matériau cuit l'ensemble des opérations suivantes consistant en une pyrolyse de la résine du matériau, puis un recouvrement desdites fibres par un produit d'enduction, suivi d'un traitement thermique.

2. Procédé selon la revendication 1, caractérisé en ce qu'on utilise des fibres d'un diamètre compris entre 2 et 15 microns (µm) et d'une longueur comprise entre 300 et 1500 microns (µm).

3. Procédé selon la revendication 1, caractérisé en ce que le milieu dispersant est choisi parmi l'eau, une cétone aliphatique, un alcool aliphatique et un solvant organique halogéné.

4. Procédé selon la revendication 1, caractérisé en ce que l'agent émulsionnant est choisi parmi un polyalcool aliphatique, un éther de polyalcool, un acide aryl- ou alkylsulfonique, un polyphosphate alcalin et un métaphosphate alcalin.

5. Procédé selon la revendication 1, caractérisé en ce que la résine utilisée est une résine formophénolique de type résol.

6. Procédé selon la revendication 2, caractérisé en ce que les fibres utilisées sont des fibres de carbone, de graphite, de carbure de silicium, de mullite, d'alumine, de silice, de verre, de nitrure de bore, de zircone, de polyamides aromatiques ou d'un composé alumino-boro-silicaté de verre respectivement connus sous les noms commerciaux «Kevlar» et «Nextel».

7. Procédé selon la revendication 1, caractérisé en ce que le produit d'enduction des fibres est la résine utilisée pour fabriquer le matériau cuit.

8. Procédé selon la revendication 1, caractérisé en ce que le produit d'enduction des fibres est une résine et en ce que le traitement thermique de cette résine est une cuisson suivie d'une pyrolyse effectuée en atmosphère neutre à une température compris entre environ 700 et 2700°C.

9. Procédé selon la revendication 1, caractérisé en ce que le produit d'enduction des fibres est du brai et en ce que le traitement thermique est une pyrolyse.

10. Procédé selon la revendication 1, caractérisé en ce que le produit d'enduction des fibres est du carbone pyrolytique déposé sur le matériau par dépôt chimique en phase vapeur suivi le cas échéant d'une graphitisation.

11. Procédé selon la revendication 1, caractérisé en ce que le produit d'enduction des fibres est un précurseur de matériau céramique que l'on polymérise par cuisson suivie d'une pyrolyse en atmosphère neutre.

12. Procédé selon la revendication 11, caractérisé en ce que le précurseur du matériau céramique est choisi parmi un composé organométallique du silicium, du titane, du zirconium, de l'aluminium, du chrome, du bore, de l'hafnium et de l'azote.

**Patentansprüche**

1. Verfahren zur Herstellung eines Hitzeschutzmaterials oder Hitzeschutzteils, die sehr bedeutende thermische Schocks sowie sehr hohe Temperaturen in der Grössenordnung von 1000°C während etwa 10 h aushalten können, die ein Substrat von anorganischen und/oder organischen, mit einem Verstärkerkunstharz versteiften Fasern umfassen, gekennzeichnet durch

— die Herstellung einer ersten Lösung, die ein im Kunstharz nicht lösliches Dispergiermittel und ein Emulgiermittel umfasst, in der die Fasern suspendiert werden,

— Herstellung einer zweiten Lösung, die das flüssige Kunstharz, ausgewählt unter thermostabilen und thermohärtbaren Kunstharzen mit einem Kohlenstoffgehalt über 45 Gew.-%, das gleiche Emulgiermittel wie in der ersten Lösung, ein Lösungsmittel für das Kunstharz und das gleiche, mit dem Lösungsmittel mischbare Dispergiermittel wie in der ersten Lösung umfasst,

— Vermischung der ersten und der zweiten Lösung zu einer flüssigen homogenen Phase, die so lange homogen gehalten wird, bis sich die in dieser Phase suspendierten Tröpfchen des flüssigen Kunstharzes langsam zusammenballen und auf den Fasern einen Kunstharzfilm bilden,

— Formen des Schutzmaterials oder -teils, das getrocknet und durch entsprechendes Brennen gehärtet wird, und

— mindestens einmalige zusätzliche Behandlung des gebrannten Materials in den folgenden Stufen:

— Pyrolyse des Kunstharzes des Materials,

— Überziehen der Fasern mit einem Überzugsmittel und

— anschliessende thermische Behandlung.

2. Verfahren nach Anspruch 1, gekennzeichnet durch die Verwendung von Fasern mit einem Durchmesser von 2 bis 15 μm und einer Länge von 300 bis 1500 μm.

3. Verfahren nach Anspruch 1, dadurch gekennzeichnet, dass das Dispergiermittel unter Wasser, aliphatischen Ketonen, aliphatischen Alkoholen und organischen halogenierten Lösungsmitteln ausgewählt wird.

4. Verfahren nach Anspruch 1, dadurch gekennzeichnet, dass das Emulgiermittel unter aliphatischen Polyalkoholen, Polyalkoholethern, Aryloder Alkylsulfonsäuren, alkalischen Polyphosphaten und alkalischen Metaphosphaten ausgewählt wird.

5. Verfahren nach Anspruch 1, dadurch gekennzeichnet, dass das verwendete Kunstharz ein Formaldehydphenolharz vom Resoltyp ist.

6. Verfahren nach Anspruch 2, gekennzeichnet durch die Verwendung von Fasern aus Kohlenstoff, Graphit, Siliziumcarbid, Mullit, Aluminium, Silizium, Glas, Bornitrid, Zirconium, aromatischen Polyamiden oder einer Aluminium-Bor-Silizium-Glasverbindung, bekannt unter den Handelsnamen «Kevlar» und «Nextel».

7. Verfahren nach Anspruch 1, dadurch gekennzeichnet, dass das Überzugsmittel für die Fasern das zur Herstellung des gebrannten Materials verwendete Kunstharz ist.

8. Verfahren nach Anspruch 1, dadurch gekennzeichnet, dass das Überzugsmittel für die Fasern ein Kunstharz ist und die thermische Behandlung dieses Kunstharzes ein Brennen und nachfolgende Pyrolyse in neutraler Atmosphäre bei einer Temperatur von etwa 700 bis 2700°C umfasst.

9. Verfahren nach Anspruch 1, dadurch gekennzeichnet, dass das Überzugsmittel für die Fasern Teerpech ist und die thermische Behandlung eine Pyrolyse ist.

10. Verfahren nach Anspruch 1, dadurch gekennzeichnet, dass das Überzugsmittel für die Fasern pyrolytischer Kohlenstoff ist, der auf dem Material chemisch aus der Dampfphase niedergeschlagen und gegebenenfalls graphitisiert worden ist.

11. Verfahren nach Anspruch 1, dadurch gekennzeichnet, dass das Überzugsmittel für die Fasern eine Keramikmaterialvorstufe ist, die durch Brennen und nachfolgende Pyrolyse in neutraler Atmosphäre polymerisiert wird.

12. Verfahren nach Anspruch 11, dadurch gekennzeichnet, dass die Keramikmaterialvorstufe unter organometallischen Verbindungen von Silizium, Titan, Zirconium, Aluminium, Chrom, Bor, Hafnium und Stickstoff gewählt wird.

**Claims**

1. Process for the manufacture of a thermally protective material or a thermally protective member capable of withstanding very great thermal shock and also very high temperatures, which may be of the order of 1000°C, for approximately ten hours, and comprising a substrate made of mineral and/or organic fibres stiffened by a reinforcing resin, characterised in that there are prepared a first solution containing a dispersing agent that does not dissolve the resin and an emulsifying agent in which the said fibres are suspended, and a second solution containing the said liquid resin chosen from thermostable and thermosetting resins having a carbon content greater than 45% by weight, an emulsifying agent identical with that used in the first solution, a solvent for the resin and a dispersing medium that is identical with that used in the first solution and is miscible with the said solvent, the first and second solutions are mixed until a homogeneous liquid phase is obtained, the homogeneity of this phase is maintained during the time required for the droplets of liquid resin suspended in this phase to collect slowly and form a film of resin on the fibres, the material or the member is formed, dried and hardened by suitable curing, and, in addition, there are carried out at least once on the cured material all of the following operations, comprising pyrolysis of the resin in the material, then covering of the said fibres with a coating product, followed by thermal treatment.

2. Process according to claim 1, characterised in that the fibres used have a diameter of from 2 to 15 microns ($\mu$m) and a length of from 300 to 1500 microns ($\mu$m).

3. Process according to claim 1, characterised in that the dispersing medium is chosen from water, an aliphatic ketone, an aliphatic alcohol and a halogenated organic solvent.

4. Process according to claim 1, characterised in that the emulsifying agent is chosen from an aliphatic polyalcohol, an ether of a polyalcohol, an aryl- or alkylsulphonic acid, an alkaline polyphosphate and an alkaline metaphosphate.

5. Process according to claim 1, characterised in that the resin used is a phenol formaldehyde resol resin.

6. Process according to claim 2, characterised in that the fibres used are fibres of carbon, graphite, silicon carbide, mullite, alumina, silica, glass, boron nitride, zirconium, or of aromatic polyamides or of an alumino-borosilicate glass, known respectively under the commercial names «Kevlar» and «Nextel».

7. Process according to claim 1, characterised in that the product used for coating the fibres is the resin used for manufacturing the cured material.

8. Process according to claim 1, characterised in that the product used for coating the fibres is a resin and in that the thermal treatment of this resin is curing followed by pyrolysis in a neutral atmosphere at a temperature of approximately from 700 to 2700°C.

9. Process according to claim 1, characterised in that the product used for coating the fibres is pitch and in that the thermal treatment is pyrolysis.

10. Process according to claim 1, characterised in that the product used for coating the fibres is pyrolytic carbon deposited on the material by vapour phase chemical deposition followed, where appropriate, by graphitisation.

11. Process according to claim 1, characterised in that the product used for coating the fibres is a precursor of ceramic material that is polymerised by curing followed by pyrolysis in a neutral atmosphere.

12. Process according to claim 11, characterised in that the ceramic material precursor is chosen from an organometallic compound of silicon, titanium, zirconium, aluminium, chromium, boron, hafnium or nitrogen.